# EUROPÄISCHE PATENTSCHRIFT

(11) **EP 3 897 874 B1**
(45) Veröffentlichungstag und Bekanntmachung des Hinweises auf die Patenterteilung: **12.07.2023**
(21) Anmeldenummer: 19795504.0
(22) Anmeldetag: 23.10.2019
(51) Int. Cl.: A62C 2/24, F24F 11/34, F24F 13/14, F16K 1/22, F16K 17/38

(54) **BLOCKIERUNGSVORRICHTUNG FÜR EINEN KLAPPENANTRIEB**
BLOCKING MECHANISM FOR A FLAP DRIVE
DISPOSITIF DE BLOCAGE POUR UN ENTRAÎNEMENT DE CLAPET

(30) Priorität: 20.12.2018 CH 15772018
(43) Veröffentlichungstag der Anmeldung: 27.10.2021
(73) Patentinhaber: Belimo Holding AG, 8340 Hinwil (CH)
(72) Erfinder: DÜRLER, Aaron, 8614 Bertschikon (CH)
(74) Vertreter: Rentsch Partner AG
(86) Internationale Anmeldenummer: PCT/EP2019/078840
(87) Internationale Veröffentlichungsnummer: WO 2020/126165

(56) Entgegenhaltungen:
- WO-A1-2015/135988
- DE-U1- 9 409 609
- US-B1- 9 851 121

## Beschreibung

Die vorliegende Erfindung betrifft eine Blockierungsvorrichtung für einen Klappenantrieb, einen Klappenantrieb mit einer Blockierungsvorrichtung sowie eine Klappenvorrichtung mit einem Klappenantrieb und einer Klappe. Bei der Klappe kann es sich dabei insbesondere um eine Entrauchungsklappe handeln.

### Hintergrund, Stand der Technik

Brandschutzanlagen entsprechend dem Stand der Technik weisen unter anderem Entrauchungsklappen auf. Diese werden im Brandfall jeweils durch einen zugeordneten Klappenantrieb in eine Sicherheitsstellung bewegt, in welcher sie während des weiteren Brandverlaufes für einen längeren Zeitraum sicher verbleiben müssen. In der Sicherheitsstellung kann die Klappe dabei entweder geöffnet sein, um einen Rauchabzug aus einem vom Brand betroffenen Gebäudeabschnitt zu ermöglichen, oder geschlossen sein, um eine Rauchausbreitung zu verhindern. Bedingt durch die im Brandfall auftretende Luftströmung mit Strömungsgeschwindigkeiten über 10 m/s kann auf die Klappen dabei eine erhebliche Kraft bzw. ein erhebliches Drehmoment wirken. Dieses Moment muss vom Klappenantrieb in der Sicherheitsstellung aufgenommen werden, um eine ungewollte Bewegung der Klappe zu vermeiden. Alternativ kann es sich bei der Klappe um eine Brandschutzklappe handeln, welche im Brandfall geschlossen wird um eine Brandausbreitung zu verhindern.

Es ist zu beachten, dass der Kraftfluss in diesem Fall umgekehrt zum regulären Betrieb ist, d. h. die Klappe bzw. ihr bewegliches Klappenelement wird mit einer Kraft beaufschlagt, welche an der Ausgangseite des Klappenantriebs in diesen eingeleitet wird.

Um einen sicheren Verbleib der Klappe in ihrer Sicherheitsstellung auch bei hohen Temperaturen von mehreren hundert Grad Celsius zu gewährleisten, ist es grundsätzlich bekannt, den Klappenantrieb mit einer Blockierungsvorrichtung zu versehen, welche ihn in Brandfall blockiert, auch wenn weitere Elemente aufgrund der hohen Temperatur und/oder einwirkenden Wärmemenge versagen.

Aus der WO2015135988A1 ist eine Blockierungsvorrichtung bekannt, welche das (mit der Klappe bzw. ihrem beweglichen Klappenelement gekoppelte) Ausgangsglied eines Klappenantriebs bei Überschreiten einer Blockierungstemperatur blockiert. Dies erfolgt mittels eines Blockierungselements, welches in Richtung einer Blockierungsstellung beziehungsweise Blockierstellung vorgespannt ist, aber im regulären Betrieb durch ein Aktivierungselement zurückgehalten wird. Im Brandfall versagt das zum Beispiel thermoplastische Aktivierungselement, so dass das Blockierungselement aufgrund seiner Vorspannung in die Blockierungsstellung bewegt wird.

Ferner ist aus der US9851121B1 ein motorisierter Antrieb für eine Lüftungsklappe bekannt, wobei die Lüftungsklappe im Brandfall in eine geschlossene Stellung bewegt und anschliessend in dieser verriegelt wird. Die Verriegelung erfolgt auf grundsätzlich ähnliche Weise wie bei der WO201 5135988A1, wobei die Auslösung durch das Aufschmelzen eines hitzeempfindlichen Befestigungselementes, z. B. aus Lot, erfolgt. Die Verriegelung erfolgt durch die Verschiebung einer Verriegelungsplatte mit einer Öffnung, die von der mit der Klappe gekoppelten Abtriebswelle des Antriebs durchragt wird. Nach Auslösung kommen korrespondierende Elemente der Innenkontur der Öffnung und der Abtriebswelle in Eingriff, so dass die Abtriebswelle blockiert wird.

### Darstellung der Erfindung

Die aus dem Stand der Technik bekannten Blockierungsvorrichtungen sind in der technischen Realisierung recht aufwändig. Ferner sind sie im Kraftfluss zwingend auf der Abtriebs- bzw. Ausgangsseite des Klappenantriebs, d. h. zwischen Antrieb und Klappe, und insbesondere im Kraftfluss nach dem Getriebe des Klappenantriebs angeordnet. Somit müssen sie dazu ausgelegt sein, im Brandfall das gesamte über die die Klappe auf den Antrieb rückwirkende Moment sicher und unter den grundsätzlich ungünstigen Bedingungen des Brandfalls aufzunehmen und zu absorbieren.

Eine Aufgabe der Erfindung besteht darin, den Stand der Technik hinsichtlich Blockierungsvorrichtungen für Klappenantriebe weiterzuentwickeln und eine alternative, unter Gesichtspunkten der Wirtschaftlichkeit wie der Zuverlässigkeit vorteilhafte Anordnung bereitzustellen. Vorzugsweise werden Nachteile des Standes der Technik dabei zumindest teilweise vermieden. Diese Aufgabe wird in allgemeiner Weise durch den Gegenstand der unabhängigen Patentansprüche gelöst. Weitere vorteilhafte Ausgestaltungen ergeben sich aus den abhängigen Patentansprüchen sowie der Offenbarung insgesamt.

Eine erfindungsgemässe Blockierungsvorrichtung bzw. Blockiervorrichtung dient dem Blockieren eines Klappenantriebs mit einem bei Betätigung des Klappenantriebs rotierenden Übertragungselement. Dazu ist die Blockierungsvorrichtung durch Auslösung von einem Initialzustand irrversibel in einen alternativen Blockierungszustand beziehungsweise Blockierzustand überführbar.

Das Übertragungselement ist ein bei Betätigung des Klappenantriebs rotierendes Element im Kraftfluss des Klappenantriebs, typischerweise in der Gestalt einer (Zahnrad-)Welle oder (Zahnrad-)Nabe in einem Getriebe des Klappenantriebs.

Der Initialzustand ist derjenige Zustand, welcher von der unausgelasteten Blockierungsvorrichtung im regulären Betrieb eingenommen wird. Als regulärer Betrieb wird dabei ein Zustand des allgemeinen Betriebs ohne Brandfall und ohne Auslösung der Blockierungsvorrichtung bezeichnet. Da eine Überführung in den alternativen Blockierungszustand irreversibel ist, kann eine Auslösung der Blockierungsvorrichtung nur einmalig erfolgen. Im Blockierungszustand verbleibt die Blockierungsvorrichtung nach ihrer Auslösung dauerhaft bis zum Brandbedingten Ausfall des Klappenantriebs insgesamt oder ggf. zur alternativen Instandsetzung.

Die Blockierungsvorrichtung umfasst ein erstes Blockierungselement beziehungsweise Blockierelement und ein zweites Blockierungselement beziehungsweise Blockierelement. Das erste Blockierungselement ist beweglich gelagert und ist aus einer im Initialzustand eingenommenen Freigabestellung des ersten Blockierungselements in Richtung einer Blockierungsstellung des ersten Blockierungselements bewegbar. Das zweite Blockierungselement ist vom ersten Blockierungselement separat beweglich gelagert und ist und aus einer im Initialzustand eingenommenen Freigabestellung des zweiten Blockierungselements in Richtung einer Blockierungsstellung des zweiten Blockierungselements bewegbar.

Die unabhängige bewegliche Lagerung des ersten und des zweiten Blockierungselements bewirkt, dass sich diese unabhängig voneinander aus ihrer jeweiligen Freigabestellung in bzw. in Richtung ihrer jeweiligen Blockierungsstellung bewegen lassen. Spezielle Vorteile einer solchen Konfiguration werden im weiteren Verlauf erläutert und näher diskutiert.

Grundsätzlich können neben dem ersten und zweiten Blockierungselement auch weitere Blockierungselemente, etwa ein drittes Blockierungselement, ein viertes Blockierungselement usw. vorgesehen sein, die in entsprechender Weise angeordnet sind und entsprechend wirken. Wo nicht anders erwähnt gelten Ausführungen für das erste und das zweite Blockierungselement in analoger Weise ebenfalls für ggf. weitere vorhandene Blockierungselemente.

Das erste Blockierungselement und das zweite Blockierungselement sind jeweils dazu ausgelegt, in ihrer jeweiligen Freigabestellung eine rotierende Bewegung des Übertragungselements zuzulassen und in ihrer jeweiligen Blockierungsstellung eine rotierende Bewegung des Übertragungselements durch Eingriff zu blockieren.

Die Blockierungsvorrichtung weist ferner eine Antriebsvorrichtung auf. Diese beaufschlagt das erste Blockierungselement und das zweite Blockierungselement mit einer Kraft in Richtung ihrer jeweiligen Blockierungsstellung. Diese Kraftbeaufschlagung ist im regulären Betrieb bei nicht ausgelöster Blockierungsvorrichtung dauerhaft gegeben. Nach Auslösung der Blockierungsvorrichtung bewirkt die Kraftbeaufschlagung eine Bewegung der Blockierungselemente in ihre bzw. in Richtung ihrer jeweiligen Blockierungsstellung. Wie weiter unten erläutert, kann die Antriebsvorrichtung jeweils ein separates Element zum Antrieb jedes Blockierungselements umfassen. Grundsätzlich ist aber auch ein gemeinsames Antriebselement für beide oder allgemein für mehrere Blockierungselemente möglich. Die Antriebsvorrichtung der Blockierungsvorrichtung ist zu unterscheiden von dem typsicherweise durch einen elektrischen Motor gebildeten Aktuator des Klappenantriebs zur Bewegung der Klappe bzw. ihres Klappenelements.

Die Blockierungsvorrichtung weist ferner eine Rückhaltevorrichtung auf. Die Rückhaltevorrichtung hält im Initialzustand das erste Blockierungselement und das zweite Blockierungselement gegen die von der Antriebsvorrichtung auf das erste Blockierungselement und das zweite Blockierungselement ausgeübte Kraft in seiner jeweiligen Freigabestellung. Die Rückhaltevorrichtung ist diejenige Anordnung, welche im regulären Betrieb die Blockierungselemente gegen die durch die Antriebsvorrichtung ausgeübte Kraft in ihrer jeweiligen Freigabestellung hält.

Die Blockierungsvorrichtung weist ferner eine Auslösevorrichtung auf. Die Auslösevorrichtung deaktiviert bei Überschreiten einer Auslösetemperatur und/oder bei Beaufschlagung mit einer Auslösewärme die Rückhaltevorrichtung irreversibel. Hierdurch erfolgt die Auslösung der Blockierungsvorrichtung. Die Deaktivierung der Rückhaltevorrichtung entspricht einem kontrollierten Versagen der Rückhaltevorrichtung, in Folge derer die Blockierungselemente der jeweils auf sie durch die Antriebsvorrichtung ausgeübten Kraft folgen und entsprechend in Richtung ihrer jeweiligen Blockierungsstellung getrieben werden.

Die Auslösetemperatur bzw. Auslösewärme ist dabei so bemessen, dass eine Auslösung der Blockierungsvorrichtung im Brandfall nicht sofort erfolgt. Vielmehr soll eine Auslösung erst bei einem länger andauernden Brandereignis mit entsprechender Wärmefreisetzung erfolgen. Eine Auslösung der Blockierungsvorrichtung erfolgt demnach nicht bei Meldung bzw. Detektion eines Brandfalls durch eine Brandmeldeanlage, sondern erst verzögert im Verlauf des Brandereignisses.

In einer Ausführungsform sind das erste Blockierungselement und das zweite Blockierungselement jeweils linearbeweglich geführt. Hierfür weist eine entsprechend ausgestaltete Blockierungsvorrichtung für jedes Blockierungselement eine dem Blockierungselement zugeordnete Linearführung auf. In einer Ausgestaltung sind dabei ferner eine Bewegungsrichtung des ersten Blockierungselements und eine Bewegungsrichtung des zweiten Blockierungselements von ihrer jeweiligen Freigebestellung in ihre jeweilige Blockierungsstellung parallel zueinander sind. Das erste und das zweite Blockierungselement sind hierbei entsprechend parallel zueinander linearbeweglich geführt.

Die Ausgestaltung kann dabei insbesondere derart sein, dass sich das erste und das zweite Blockierungselement in einer Aufsicht auf der gleichen Seite des Übertragungselements angeordnet sind und sich bei Auslösung der Blockierungsvorrichtung von der glichen Seite her in Richtung auf das Übertragungselement hin bewegen. In einer Aufsicht verlaufen die Bewegungsrichtung des ersten und zweiten Blockierungselements zum Beispiel jeweils entlang einer Sekante zum Querschnitt eines zylindrischen Übertragungselements. In weiteren alternativen Ausgestaltungen können das erste und das zweite Blockierungselement aber auch etwa auf gegenüberliegenden Seiten des Übertragungselements in einem Winkel von 180 Grad angeordnet sein. In diesem Fall sind die Bewegungsrichtungen von der Freigabestellung in die Blockierungsstellung für das erste und zweite Blockierungselement jeweils entgegengesetzt und die Blockierungselemente bewegen sich bei Auslösung aufeinander zu, wobei die Bewegung jeweils z. B. auf die Drehachse des Übertragungselements hin verläuft. In weiteren Ausgestaltungen sind die Blockierungselemente in einem anderen Winkel von z. B. 90 Grad zueinander angeordnet. In weiteren Ausgestaltungen ist eine Mehrzahl von z. B. drei oder vier Blockierungselementen konzentrisch um das Übertragungselement herum angeordnet. Alternativ sind aber auch andere als lineare Bewegungen der Blockierungselemente möglich, etwa Schwenkbewegungen.

In einer Ausführungsform verlaufen eine Bewegungsrichtung des ersten Blockierungselements und eine Bewegungsrichtung des zweiten Blockierungselements von ihrer jeweiligen Freigebestellung in ihre jeweilige Blockierungsstellung quer zu einer Drehachse des Übertragungselements.

In einer Ausführungsform sind das erste Blockierungselement und das zweite Blockierungselement derart angeordnet, dass sie in ihrem jeweiligen im Blockierungszustand in eine Ausnehmung des Übertragungselements einzugreifen. Dieser Eingriff stellt dabei die Blockierung her, wobei ein gewisses Spiel und damit verbundene Drehbarkeit des Übertragungselements um einen begrenzten Winkel gegebenenfalls weiter gegen sind. Die Ausnehmungen befinden sich am Umfang des Übertragungselements und können beispielsweise als axiale Schlitze realisiert sein. In einer besonders vorteilhaften Ausgestaltung weist das Übertragungselement in seinem für das Zusammenwirken mit dem Blockierungselement relevanten Bereich einen zumindest im Wesentlichen zylindrischen Grundkörper auf. Von diesem Grundkörper ragt eine Anzahl von über den Umfang verteilten Vorsprüngen ab. Beispielsweise können vier über den Umfang des Übertragungselements gleichmässig verteilte Vorsprünge vorgesehen sein. Eine derartige Anordnung ist in der Lage, auch grosse Momente unter ungünstigen Bedingungen Sicher aufzunehmen und so die die Blockierung zu gewährleisten. Grundsätzlich sind aber auch andere Anordnungen möglich. So das Übertragungselement insbesondere eine Verzahnung aufweisen, in weiche die Blockierungselemente eingreifen.

In einer Ausführungsform sind das erste Blockierungselement und das zweite Blockierungselement derart angeordnet, dass für jede rotatorische Stellung des Übertragungselements bei Auslösung zumindest das erste Blockierungselement oder das zweite Blockierungselement in Eingriff mit dem Übertragungselement gelangt.

Der Begriff "Eingriff" ist bezogen auf ein Blockierungselement dabei so zu verstehen, dass das Blockierungselemente eine äussere, typischerweise zylindrische, Mantelfläche des Übertragungselements durchdringt. Daher wird der Eingriff auch als Eintauchen bezeichnet.

Eine derartige Ausgestaltung stellt vorteilhaft sicher, dass bei Auslösung der Blockierungsvorrichtung unabhängig von der rotatorische Stellung des Übertragungselements eine Blockierung erfolgen kann, in welcher überhaupt keine oder nur eine sehr begrenzte Drehbarkeit des Übertragungselements gegeben ist. Dies ist insbesondere dann von Bedeutung, wenn nicht definiert ist, welche rotatorische Stellung das Übertragungselement im Brandfall bzw. in der Sicherheitsstellung der Klappe einnimmt. Dies kann aus einer Reihe von Gründen der Fall sein. So kann die Sicherheitsstellung unabhängig vom Klappenantrieb durch einen unmittelbar an der Klappe befindlichen Anschlag bestimmt sein. Ferner kann bezogen auf ein- und dieselbe Klappenstellung die rotatorische Stellung des Übertragungselements mehrdeutig sein. Dies ist dann der Fall, wenn die Blockierungsvorrichtung nicht unmittelbar an der Ausgangsseite des Klappenantriebs angeordnet, wie es etwa bei einer Anordnung gemäss US9851121B1 der Fall sein muss, sondern im Kraftfluss in Richtung des Aktuators vorgelagert ist, und z. B. bei einer Zwischenstufe eines Reduziergetriebes wirkt. Weitere Unsicherheiten hinsichtlich der rotatorischen Stellung des Übertragungselements ergeben sich aus Toleranzen, Spiel und insgesamt der Elastizität bzw. der Deformierbarkeit der Komponenten gerade im Brandfall.

Bei einer Anordnung mit über den Umfang des Übertragungselements verteilten Vorsprüngen, wie oben beschreiben, ist eine Situation möglich, bei welcher ein Blockierungselement bei der Bewegung in Richtung seiner Blockierungsstellung vor deren Erreichen auf einen Vorsprung des Übertragungselements auftrifft. Es gelangt dann nicht in Eingriff mit dem Übertragungselement und ist somit für die Blockierung unwirksam. Bei einer Anordnung gemäss der hier beschriebenen Ausgestaltung ist sichergestellt, dass zumindest das andere oder allgemein ein weiteres Blockierungselement dennoch in Eingriff mit dem Übertragungselement gelangt.

In einer Ausführung umfasst die Antriebsvorrichtung eine auf das erste Blockierungselement wirkende erste Druckfeder und eine auf das zweite Blockierungselement wirkende zweite Druckfeder. Die Druckfedern sind dabei im Freigabezustand komprimiert bzw. gespannt und bewirken so die Kraftbeaufschlagung der Blockierungselemente. Bei Auslösung der Blockierungsvorrichtung werden sie zumindest teilweise entspannt und treiben so die Blockierungselemente Richtung ihrer jeweiligen Freigabestellung. Vorteilhaft ist die Dimensionierung der Druckfedern dabei so, dass sie auch in der Blockierungsstellung des jeweils zugeordneten Blockierungselements noch teilweise komprimiert sind und so eine Kraft auf das Blockierungselement ausüben.

In einer Ausführung weist die die Rückhaltevorrichtung ein distales Rückhalteelement und ein separates proximales Rückhaltelement auf. Dabei ist das distale Rückhalteelement gegen ein Widerlager festgelegt. Im Initialzustand steht ferner das proximale Rückhaltelement mit dem ersten Blockierungselement und dem zweiten Blockierungselement in Eingriff. Das distale Rückhaltelement und das proximale Rückhaltelement sind dabei im Initialzustand über die Auslösevorrichtung starr gekoppelt. Eine Auslösung der Blockierungsvorrichtung wird durch ein gewolltes Versagen der Auslösevorrichtung bewirkt. Die Richtungsbezeichnungen "distal" und "proximal" beziehen sich dabei auf das Übertragungselement. Das Widerlager ist ortsfest bezüglich eines Chassis-oder Gehäuseelements und des Klappenantriebs und absorbiert im Ruhezustand die Kraft des Antriebselementes. Der entsprechende Kraftfluss geht dabei vom proximalen Rückhaltelement über das Auslöseelement zum distalen Rückhaltelement und von diesen zum Widerlager.

In einer Ausgestaltung verbindet dabei das Auslöseelement das distale Rückhaltelement und das proximalen Rückhaltelement im Initialzustand stoff- und/oder formschlüssig. In einer Ausgestaltung wird dabei das Aktivierungselement durch Lot beziehungsweise Schmelzlot oder Klebstoff gebildet, welches bei Überschreiten der Auslösetemperatur und/oder bei Beaufschlagung mit der Auslösewärme aufschmilzt. In weiteren Ausgestaltungen kann das Auslöseelement z. B. durch ein oder mehrere Stifte oder Nieten realisiert sein, welche, das proximale und das distale Rückhalteelement verbinden, wobei die Verbindung bei Überschreiten der Auslösetemperatur bzw. der Auslösewärme versagt. In einer beispielhaften Ausführungsform besteht das Aktivierungselement aus einem Schmelzlot mit einer Auslösetemperatur von 117 Grad Celsius.

In einer Ausführungsform bildet die Blockierungsvorrichtung im Initialzustand eine abgeschlossene, kompakte Baugruppe. Auf diese Weise lässt sich die Blockierungsvorrichtung vormontieren und bei der Montage des Klappenantriebs als Ganze einsetzen bzw. verbauen.

Ein erfindungsgemässer Klappenantrieb umfasst einen elektrischen Aktuator, insbesondere Motor, sowie ein Getriebe. Eine Eingangsseite des Getriebes ist mit dem Aktuator gekoppelt ist und eine Ausgangsseite des Getriebes weist eine Klappenschnittstelle zur Kopplung mit einem Klappenelement auf. Das Getriebe weist ein im Kraftfluss vom Aktuator zur Klappenschnittstelle angeordnetes Übertragungselement auf, welches sich bei Betätigung des Klappenantriebs rotatorisch bewegt. Das Getriebe ist typischerweise ein Reduziergetriebe und kann in grundsätzlich bekannter Weise etwa als mehrstufiges Stirnradgetriebe mit einer Eingangsstufe, einer Ausgangsstufe und optional einer oder mehreren Zwischenstufen ausgeführt sein.

Der Klappenantrieb umfasst ferner eine Blockierungsvorrichtung gemäss obiger und/oder nachfolgender Darstellung, welche in ihrem Blockierungszustand eine Drehung des Übertragungselements und der Klappenschnittstelle blockiert.

Die Blockierungsvorrichtung kann dabei unmittelbar an der Klappenschnittstelle und an der Ausgangsseite des Getriebes angeordnet sein. In diesem Fall muss die Blockierungsvorrichtung im Blockierungszustand in der Lage sein, das gesamte von der Klappe auf den Klappenantrieb rückwirkende Moment aufzunehmen und zu kompensieren.

In einer Ausführungsform ist das Übertragungselement im Kraftfluss vor beziehungsweise aktuatorseitig einer Ausgangsstufe des Getriebes angeordnet. Hierdurch wird das von der Blockierungsvorrichtung aufzunehmende Moment entsprechend reduziert. In einer derartigen Ausführungsform ist das Übertragungselement dementsprechend nicht an der Ausgangsstufe und insbesondere nicht an der Abtriebs- bzw. Ausgangsseite der Ausgangsstufe angeordnet. Grundsätzlich ist auch eine Anordnung unmittelbar am Aktuator bzw. Motor möglich, wobei dann die die Motorwelle oder eine Verlängerung der Motorwelle das Übertragungselement darstellt. Ebenso ist es grundsätzlich möglich, dass Übertragungselement an der Abtriebsseite des Getriebes, z. B. an der Klappenschnittstelle angeordnet ist oder ein Bestandteil der Klappenschnittstelle ist. Typischerweise ist das Übertragungselement an ein einer Zwischenstufe des Getriebes angeordnet.

In einer weiteren besonderen Ausführungsform sind das Übertragungselement, die Klappenschnittstelle und alle Elemente im Kraftfluss zwischen Übertragungselement und Klappenschnittstelle dazu ausgelegt, einer Temperatur jenseits der Auslösetemperatur und/oder einer Beaufschlagung mit einer Wärme jenseits der Auslösewärme standzuhalten. Eine derartige Ausgestaltung ist insbesondere dann vorteilhaft, wenn die Blockierungsvorrichtung im Kraftfluss vor, d. h. aktuatorseitig, der Ausgangsstufe des Getriebes angeordnet ist. Nur mit einer derartigen Auslegung kann dann eine Bewegung des Klappenelements im Blockierungszustand sicher blockiert werden. Die im Kraftfluss aktuatorseitig der Blockierungsvorrichtung befindlichen Komponenten und der Aktuator selbst dürfen dagegen grundsätzlich versagen. Vorteilhaft sind die Elemente des Klappenantriebs, für welche die Funktion jenseits der Auslösetemperatur bzw. Auslösewärme gewährleistet seien muss, vollständig aus einem entsprechend hitzebeständigen Material, etwa Stahl, gefertigt. Ebenso ist die Blockierungsvorrichtung bis auf das bewusst versagende Auslöseelement dazu ausgelegt, einer Temperatur jenseits der Auslösetemperatur und/oder einer Beaufschlagung mit einer Wärme jenseits der Auslösewärme standzuhalten.

Die Blockierungsvorrichtung ist vorteilhaft in Form einer kompakten Baugruppe etwa durch Schrauben oder Nieten an einem Gehäuse- oder Chassiselement oder einer Zwischenplatine des Klappenantriebs montiert.

Eine erfindungsgemässe Klappenvorrichtung umfasst einen Klappenantrieb gemäss obiger und/oder nachfolgender Darstellung sowie eine Klappe mit einem zur Anordnung in einem Fluidstrom, insbesondere einem Gasstrom, ausgelegten beweglichen Klappenelement. Das Klappenelement ist mit der Klappenschnittstelle gekoppelt und durch Betätigung des Klappenantriebs im Initialzustand der Blockierungsvorrichtung bewegbar und im Blockierungszustand der Blockierungsvorrichtung unbeweglich blockiert. Bei dem Fluidstrom handelt es sich typischerweise um einen Luft- und/oder Rauchgasstrom.

Der Begriff Klappe wird grundsätzlich im Sinne einer Baugruppe verwendet, welche zumindest ein bewegliches Klappenelement und gegebenenfalls weitere Komponenten, wie einen Montagerahmen, Anschluss- und Verbindungsgestänge und Anschläge umfasst. Eine Klappenbewegung ist dabei gemäss üblichem Sprachgebrauch als Bewegung des Klappenelements zu verstehen. Das Klappenelement kann einstückig oder mehrstückig ausgeführt sein. Ein mehrstückiges Klappenelement kann beispielsweise eine Anzahl gekoppelter und zum Öffnen beziehungsweise Schliessen gemeinsam bewegbarer Lamellen aufweisen.

### Ausführungsbeispiele

Anhand der in den nachfolgenden Figuren gezeigten Ausführungsbeispiele und der dazugehörigen Beschreibung werden Aspekte der Erfindung näher erläutert. Es zeigen:
- Fig. 1: eine Anordnung mit einem Klappenantrieb und einer Klappe in schematischer Ansicht im montierten Zustand;
- Fig. 2: eine Anordnung mit einem Klappenantrieb und einer Klappe in schematischer Ansicht im regulären Betriebs des Klappenantriebs;
- Fig. 3: eine Anordnung mit einem Klappenantrieb und einer Klappe in schematischer Ansicht nach Auslösung der Blockierungsvorrichtung im Brandfall;
- Fig. 4: ein Ausführungsbeispiel einer montierten Blockierungsvorrichtung und ihr Zusammenwirken mit weiteren Komponenten im nicht ausgelösten in perspektivischer Ansicht;
- Fig. 5: ein zu Fig. 4 korrespondierende Aufsicht;
- Fig. 6: ein Ausführungsbeispiel einer montierten Blockierungsvorrichtung und ihr Zusammenwirken mit weiteren Komponenten im ausgelösten in perspektivischer Ansicht;
- Fig. 7: ein zu Fig. 6 korrespondierende Aufsicht;
- Fig. 8: den Ausgelösten Zustand einer montierten Blockiervorrichtung in Seitenansicht;
- Fig. 9: zeigt eine Ansicht ähnlich Fig. 7 in einer anderen Stellung des Übertragungselementes;
- Fig. 10: zeigt eine weitere Ansicht ähnlich Fig. 7 in einer anderen Stellung des Übertragungselementes;

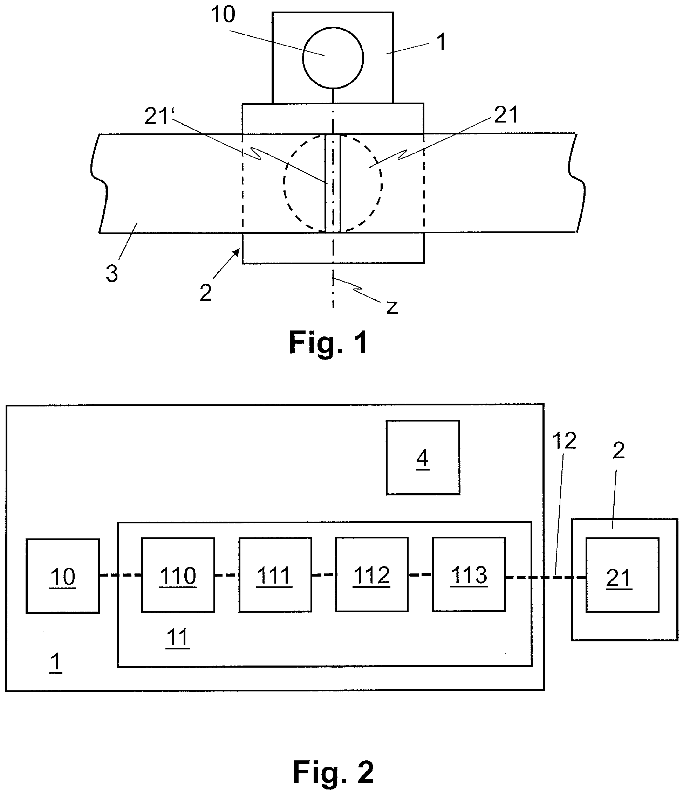

In der **Figur 1** bezieht sich das Bezugszeichen 2 auf eine Klappe, welche hier exemplarisch als Entrauchungsklappe eingesetzt wird. Die Klappe 2 ist mit einem Kanal 3 verbunden, beispielsweise einem Rohr mit rundem oder rechteckigem Querschnitt. Der Durchgang durch den Kanal 3 wird durch die Stellung eines um eine Drehachse z drehbaren Klappenelements 21 der Klappe 2 gesteuert. Das Klappenelement 21 wird durch einen mit der Klappe 2 verbundenen Klappenantrieb 1 bewegt respektive in Stellung gehalten. Der Klappenantrieb 1 als elektrischer Antrieb mit einem Motor 10 ausgeführt. Bei der Konfiguration, in welcher die Klappe 2 dem Rauchabzug aus einem von einem Brand betroffenen Gebäudeabschnitt dienen soll, wird die Klappe 2 im Brandfall durch den Klappenantrieb 1 geöffnet. In einer anderen Konfiguration gehört der Kanal 3 zu einer maschinellen Entrauchungsanlage. Hier wird die Klappe 2 im Brandfall durch den Klappenantrieb 1geschlossen, um eine Rauchausbreitung durch den Kanal 3 zu verhindern. Ein erfindungsgemässer Klappenantrieb 1 und die Klappe 2 bilden gemeinsam eine erfindungsgemässe Klappenvorrichtung.

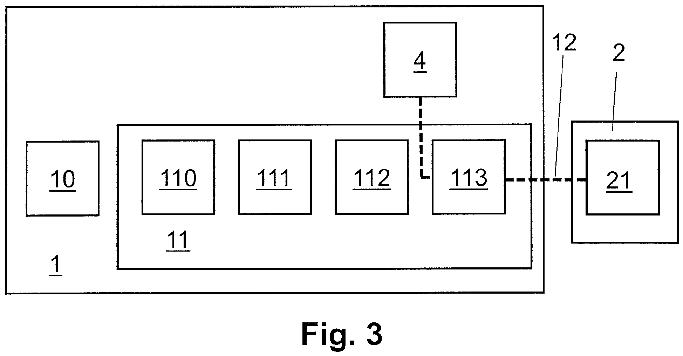

**Figur 2** und **Figur 3** zeigt einen Klappenantrieb 1 gemeinsam mit einer Klappe 2 in schematischer funktioneller Darstellung. Dabei zeigt Figur 2 den regulären Betriebszustand und Figur 3 den Zustand nach Auslösung der Blockierungsvorrichtung 4 wie nachfolgend erläutert. Die den Kraftfluss realisierenden Wirkverbindungen sind jeweils durch punktierte Linien angedeutet.

Der Klappenantrieb 1 weist ein dem Motor nachgeschaltetes Getriebe 11 in Form eines beispielhaft mehrstufigen, hier vierstufiges, Reduziergetriebe auf. Dabei bezeichnet das Bezugszeichen 110 die erste (motornächste) Stufe als Eingangsstufe und das Bezugszeichen 113 letzte (klappennächste) Ausgangsstufe des Getriebes. Die Bezugszeichen 111, 112 bezeichnen dementsprechend Zwischenstufen.

Gemäss Figur 2 verläuft der Kraftfluss im regulären Betrieb vom Motor 10 über die hintereinandergeschalteten Stufen 110, 111, 112, 113 zur Klappe 2 bzw. zum Klappenelement 21. Die Klappenschnittstelle 12 befindet sich am Ausgang der letzten Getriebestufe 1 13. Im regulären Betriebszustand kann das Klappenelement 21 durch den Klappenantrieb 1 zum Öffnen und Schliessen in beide Richtungen bewegt werden. Im Brandfall wird das Klappenelement 21 durch den Klappenantrieb 1 in die Sicherheitsstellung bewegt und verbleibt dort.

Nach einer erfolgten Auslösung der Blockierungsvorrichtung 4 verläuft der Kraftfluss gemäss Figur 3 von der Blockierungsvorrichtung 4 über die Getriebestufe 113 und die Klappenschnittstelle 12 zur Klappe 2 bzw. zum Klappenelement 21. Die Wirkverbindung zu den Getriebestufen vorgelagerten Getriebestufen 112, 110, 110 sowie schliesslich zum Motor 10 kann ggf. noch ganz oder vorhanden sein, ist aber nach Auslösung der Blockierungsvorrichtung 4 funktionell nicht mehr bedeutsam und versagt gegebenenfalls im Brandverlauf. Die Blockierungsvorrichtung 4, die Getriebestufe 113 mit der Klappenschnittstelle 12 sowie die Klappe 2 sind dazu ausgelegt, der Hitze im weiteren Brandverlauf nach Auslösung der Blockierungsvorrichtung 4 zu widerstehen. Aufgrund der auf das Klappenelement 21 wirkenden Strömung sowie ggf. das Eigengewicht des Klappenelements wird dabei ein Moment auf den Klappenantrieb 1 ausgeübt, welches durch die Blockierungsvorrichtung 4 absorbiert wird. Bei der hier gezeigten Anordnung erfolgt die Blockierung durch die Blockierungsvorrichtung 4 an der Eingangsseite der Getriebestufe 113 oder der Ausgansseite der vorhergehenden Getriebestufe 112.

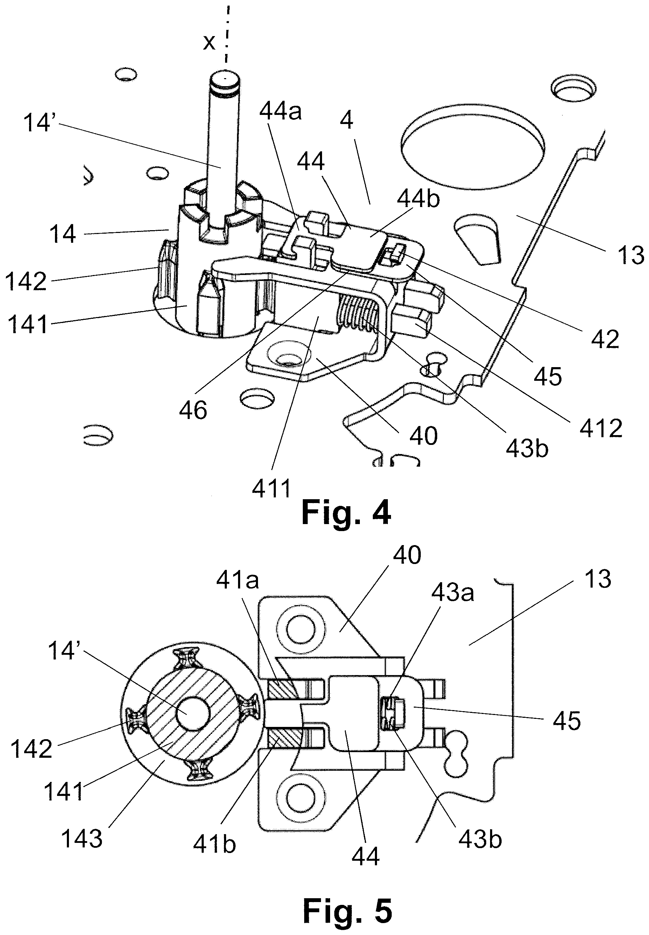

**Figur 4** und **Figur 5** zeigen eine Ausführungsform der Blockierungsvorrichtung 4 zusammen mit Komponenten des Brandschutzantriebs 1 im Initialzustand vor Auslösung der Blockierungsvorrichtung 4. Dabei zeigt 4 eine perspektivische Ansicht und Figur 5 einer teilweise geschnittene Aufsicht.

Das erste Blockierungselement 41a wird hier beispielhaft durch einen ersten Stempel und das zweite Blockierungselement 41b wird durch einen zweiten Stempel gebildet. Die beiden Blockierungselemente 41a, 41b sind parallel zueinander und nebeneinander linearbeweglich in einer Halterung 40 geführt. Das Antriebselement der Blockierungsvorrichtung 4 wird in diesem Beispiel durch eine erste Druckfeder 43a, welche auf das ersten Blockierungselement 41a wirkt, sowie eine zweite Druckfeder 43b, welche auf das zweite Blockierungselement 41b wirkt, realisiert.

Die beiden Blockierungselemente 41a, 41 b weisen jeweils einen proximalen Blockierungselement-Teil 411 auf, welcher zum unmittelbaren Zusammenwirken mit dem Übertragungselement 14 ausgelegt ist. In distaler Richtung ragt vom proximalen Blockierungselement-Teil 411 ein stabförmiger distaler Blockierungselement-Teil 412 in distaler Richtung (in den Figuren nach rechts weisend) ab, um welchen herum die jeweilige Druckfeder 43a, bzw. 43b angeordnet ist. Die Druckfedern 43a, 43b wirken dabei jeweils zwischen einem zwischen dem Blockierungselement-Teil 411 des ersten bzw. zweiten Blockierungselements 41a bzw. 41b und der als Widerlager dienenden Halterung 40.

Die Halterung 40 ist in diesem Ausführungsbeispiel als Stanzbiegeteil ausgeführt, welches zwei eine näherungsweise U-förmige Gestalt mit zwei parallelen Schenkeln (nicht referenziert) aufweist. Ein (in den Figuren unterer) Schenkel der Halterung 40 wiederum ist mit Schrauben oder Nieten (nicht dargestellt) fest auf einem Chassiselement 13 des Klappenantriebs 1 montiert. Die Linearführung der Blockierungselemente 41a, 41b ist über Schlitze in den Schenkeln realisiert, in welche die Blockierungselemente 41a, 41b jeweils mit ihrem proximalen Blockierungselement-Teil 411 eingreifen. Da die im Blockierungszustand auftretenden Kräfte über die Halterung 40 zum Chassiselement 13 geleitet werden, sind die Halterung 40 und die Befestigung auf dem Chassiselement 13 entsprechend dimensioniert.

Das Rückhalteelement der Blockierungsvorrichtung 4 wird in der gezeigten Ausführungsform durch zwei flächige bzw. plattenförmige Elemente, nämlich ein proximales Rückhaltelement 44 und ein distales Rückhalteelement 45 gebildet. Das proximale Rückhalteelement 44 weist dabei einen ankerförmig ausgestalteten proximalen Teil 44a auf, welcher in einen distalen Teil 44b übergeht. Die Ausleger des ankerförmigen proximalen Teils 44a bilden dabei quer zur Haupterstreckungsrichtung des proximalen Rückhaltelements 44 angeordnete Haken, welche im Initialzustand jeweils in eine (nicht referenzierte) Gegenkontur des proximalen Blockierungselement-Teils 411 des ersten bzw. zweiten Blockierungselements 41a, 41b eingreifen.

Das distale Rückhaltelement 45 weist in seinem hinteren bzw. distalen Bereich einen (nicht referenzierten) Durchbruch oder Ausbruch auf, in welche ein das Widerlager 42 für die Federkräfte bildender Teil der Halterung 40 eingreift.

Der distale Teil 44b des proximalen Rückhaltelementes 44 sowie das distale Rückhalteelement 45 weisen im gezeigten Ausführungsbeispiel einen im Wesentlichen rechteckigen Aufriss auf und sind sandwichartig übereinander angeordnet. Zwischen dem distalen Teil 44b des proximalen Rückhaltelementes 44 und dem distalen Rückhaltelement 45 ist eine als Auslöseelement wirkende Lotschicht 46 angeordnet, über welche das proximale Rückhaltelement 44 und das distale Rückhalteelement 45 im nicht ausgelösten Initialzustand starr verbunden sind.

Im nicht ausgelösten Initialzustand der Blockierungsvorrichtung 4 existiert ein geschlossener Kraftfluss wie folgt: Halterung 40 bzw. Widerlager 42 - distales Rückhalteelement 45 - Auslöseelement bzw. Lotschicht 46 - proximales Rückhaltelement 44 - erstes bzw. zweites Blockierungselement 44a bzw. 44b, erste Druckfeder 43a bzw. zweite Druckfeder 43b - Halterung 40. Aufgrund des in sich geschlossenen Kraftfluss kann die Blockierungsvorrichtung 4 als kompakte, d. h. formstabile und abgeschlossene Baugruppe im Initialzustand vormontiert und im Klappenantrieb 1 bzw. auf dem Chassiselement 13 einfach montiert werden. In dieser Ausführungsform sind jeweils für das erste Blockierungselement 41a und das zweite Blockierungselement 41b jeweils ein separater Antrieb mit einer zugeordneten Druckfeder 43a, 43b vorgesehen, während die Halterung 40, die Rückhaltevorrichtung mit ihren Teilen 44, 45 sowie das Auslöseelement 46 nur einfach vorgesehen ist und mit beiden Blockierungselementen 41a, 41b zusammenwirken. In alternativen Konfigurationen können diese Elemente aber auch ganz oder teilweise separat ausgeführt sein.

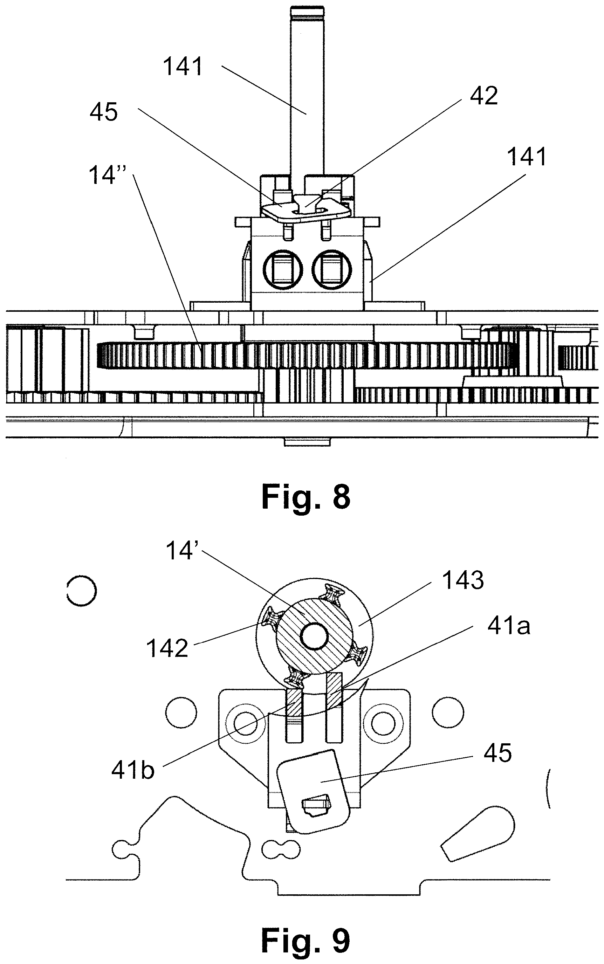

Das Übertragungselement 14 wird, wie erläutert durch die Eingangsseite oder Ausgangsseite einer Getriebestufe gebildet und entsprechend mit einem Zahnrad der Getriebestufe starr verbunden oder integral ausgeführt. Im gezeigten Ausführungsbeispiel umfasst das Übertragungselement 14 ein Zahnrad im Kraftfluss des Getriebes und einen mit dem Zahnrad 14" (siehe **Figur 8**) einstückig ausgeführtes oder starr, insbesondere drehfest gekoppelten Grundkörper 141 des Übertragungselementes 14. Das Zahnrad und der Grundkörper 141 des Übertragungselementes 14 sind exemplarisch um eine Achse 14' drehbar gelagert.

Das im Kraftfluss des Klappenantriebs 1 befindliche Übertragungselement 14 weist einen im Wesentlichen zylindrischen Grundkörper 141 auf, von welchem beispielhaft vier Vorsprünge 142 radial abragen, welche entlang des Umfangs hier gleichmässig verteilt (d. h. in einem Winkel von 90 Grad zueinander) angeordnet sind. Zwischen benachbarten Vorsprüngen 142 befindet sich jeweils eine vom Grundkörper 141 und den Vorsprüngen 143 begrenzte Ausnehmung 143. Diese Struktur mit Vorsprüngen 142 und Ausnehmungen 143 dient dem Zusammenwirken mit der Blockierungsvorrichtung, wie nachfolgend erläutert. In der in Figur 4 und Figur 5 gezeigten Initialstellung wird das Übertragungselement 14 jedoch nicht blockiert und kann entsprechend bei Betätigung des Klappenantriebs 1 grundsätzlich ungehindert und blockierungsfrei rotieren.

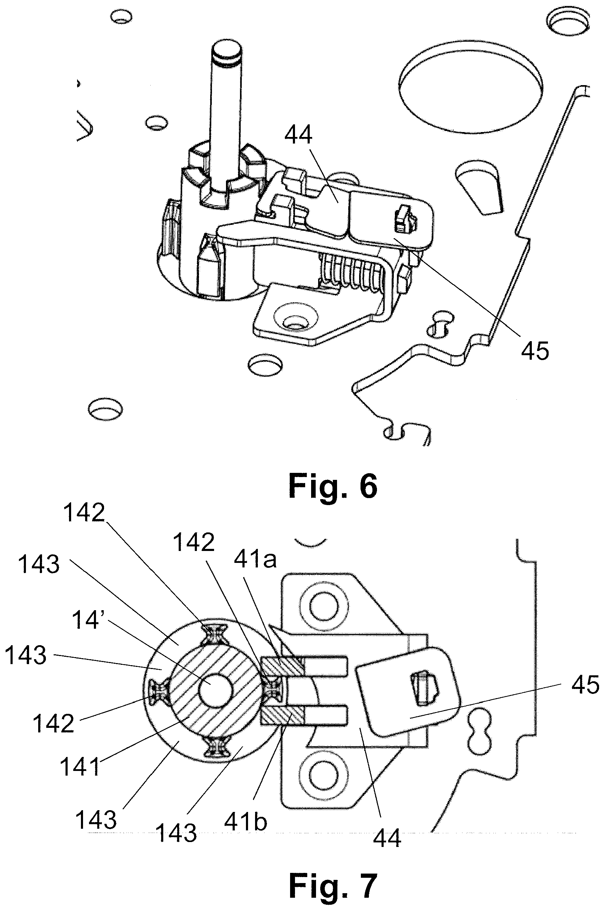

**Figur 6** und **Figur 7** entsprechen grundsätzlich Figur 4 und Figur 5, zeigen die Blockierungsvorrichtung 4 aber im Blockierungszustand nach erfolgter Auslösung. Aus Gründen der Übersichtlichkeit sind dabei in Figur 6 und Figur 7 nicht alle Bezugszeichen eingezeichnet.

Aufgrund der im Brandfall nach einiger Zeit herrschenden Temperatur jenseits der Auslösetemperatur bzw. der Beaufschlagung mit einer Wärme jenseits der Auslösewärme schmilzt die Lotschicht 46, so dass keine Kraftübertragung über das proximale Rückhaltelement 44 und das distale Rückhaltelement 45 mehr erfolgt und beide Elemente nicht mehr wirksam gekoppelt sind. Dementsprechend wird die Kraft der Druckfedern 43a, 43b nicht mehr kompensiert, so dass diese die Blockierungselemente 41a, 41b in Richtung auf das Übertragungselement 14 hintreiben, wobei sich die Druckfedern 43a, 43b teilweise entspannen. Der lichte Abstand zwischen den Blockierungselementen 41a und 41b ist so bemessen, dass er der Breite eines Vorsprungs 143 entspricht bzw. geringfügig grösser ist, so dass ein Vorsprung 143 in den zwischen den Blockierungselementen 41a, 41b bestehenden Zwischenraum eingreifen kann, wie insbesondre in Fig. 7 erkennbar.

In der hier gezeigten Situation ist die rotatorische Stellung des Übertragungselements 14 (zufällig) so, dass dies erfolgt. Wie insbesondere in Fig. 7 erkennbar, kommt entsprechend ein Vorsprung 142 im Zwischenraum zwischen den Blockierungselementen 41a, 41b zu liegen, so dass die Blockierungselemente 41a, 41b jeweils in eine benachbarte Ausnehmung 143 eingreifen. Entsprechend blockiert das Zusammenwirken der Blockierungselemente 41a, 41b mit dem zwischen ihnen liegenden Vorsprung 142 das Übertragungselement 14. In der gezeigten Situation erreichen ferner sowohl das erste Blockierungselement 41a als auch das zweite Blockierungselement 41b als Endstellung eine Blockierungsstellung, in der sie auf dem Umfang des Grundkörpers 141 aufliegen.

Der äussere Abstand zwischen den Blockierungselementen 41a und 41b ist ferner so gemessen, dass er zumindest etwas geringer ist als der Abstand benachbarter Vorsprünge 142 am äusseren Umfang. In anderen rotatorischen Stellungen greifen somit beide Blockierungselemente 41a, 41b in ein- und dieselbe Ausnehmung 143 ein, so dass ebenfalls eine Blockierung erfolgt.

Ferner existieren rotatorische Stellungen des Übertragungselements 14, in welchen eines der beiden Blockierungselemente 41a bzw. 41b auf einen Vorsprung 142 trifft und in seiner Bewegung gestoppt wird, ohne in eine Ausnehmung 143 einzugreifen. Dieses Blockierungselement kommt entsprechend für die Blockierung nicht zum Tragen. Das andere der Blockierungselemente 41a, 41b greift in diesem Fall jedoch zwingend in eine Ausnehmung 143 ein, so dass eine Blockierung auch in diesem Fall gewährleistet wird.

**Figur 8** zeigt beispielhaft den ausgelösten Zustand der Blockierungsvorrichtung 4 gemeinsam mit Elementen des Getriebes 11, insbesondere Zahnrad 14".

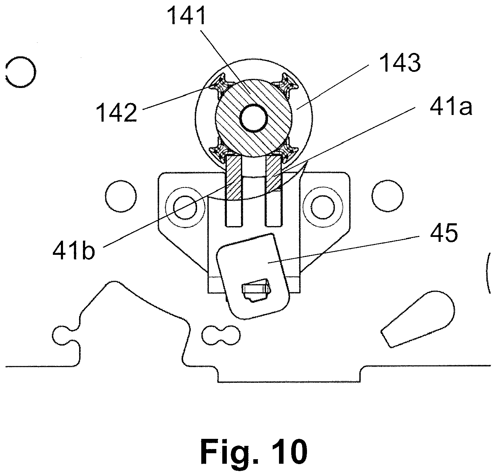

**Figur 9** und **Figur 10** zeigen ähnlich wie **Figur 7** beispielhaft den ausgelösten Zustand der Blockierungsvorrichtung 4. In Figur 9 ist die rotatorische Stellung des Übertragungselementes 14 so, dass eines der Blockierungselemente, hier das zweite Blockierungselement 41b, auf einen Vorsprung 142 des Übertragungselement-Grundkörpers 141 zu liegen kommt und somit für die Blockierung unwirksam ist. Das andere Blockierungselement, hier das erste Blockierungselement 41a, kommt in einer Ausnehmung 143 des Blockierungselement-Grundkörpers 141 zu liegen und stellt so die Blockierung sicher. In Figur 10 ist die rotatorische Stellung des Übertragungselementes 14 so, dass beide Blockierungselement 41a, 41b in einer Ausnehmung 143 des Blockierungselement-Grundkörpers 141 zu liegen kommen und so für die Blockierung wirksam sind. In der in **Figur 10** gezeigten Konfiguration ist, ebenso wie bei der in **Figur 7** gezeigten Konfiguration, keine Rotation des Übertragungselementes 14 mehr möglich (abgesehen von Spiel). Bei der in **Figur 9** gezeigten Konfiguration ist noch eine Rotation bis zum Erreichen der Konfiguration gemäss **Figur 7** oder **Figur 10****.**

### LISTE DER BEZUGSZEICHEN

- 1: Klappenantrieb
- 10: Aktuator / Motor
- 11: Getriebe
- 110: Getriebestufe
- 111: Getriebestufe
- 112: Getriebestufe
- 113: Getriebestufe
- 12: Klappenschnittstelle
- 13: Chassiselement
- 14: Übertragungselement
- 14': Achse
- 14": Zahnrad
- 141: Grundkörper des Übertragungselements
- 142: Vorsprung
- 143: Ausnehmung
- 2: Klappe
- 21: Klappenelement
- 3: Lüftungskanal
- 4: Blockierungsvorrichtung
- 40: Halterung
- 41a: erstes Blockierungselement / erster Stempel
- 41b: zweites Blockierungselement / zweiter Stempel
- 411: proximaler Blockierungselement-Teil
- 412: distaler Blockierungselement-Teil
- 42: Widerlager
- 43a: erste Druckfeder
- 43b: zweite Druckfeder
- 44: proximales Rückhalteelement
- 44a: proximaler Teil des proximalen Rückhalteelements
- 44b: distaler Teil des proximalen Rückhalteelements
- 45: distales Rückhalteelement
- 46: Auslöseelement / Lotschicht
- x: Drehachse für Übertragungselement
- z: Drehachse für Klappenelement

## Patentansprüche

1. Blockierungsvorrichtung (4) für einen Klappenantrieb (1) mit einem bei Betätigung des Klappenantriebs (1) rotierenden Übertragungselement (14), wobei die Blockierungsvorrichtung (4) durch aus Auslösung von einem Initialzustand irreversibel in einen alternativen Blockierungszustand überführbar ist und die Blockierungsvorrichtung (4) umfasst:
- ein erstes Blockierungselement (41a) und ein zweites Blockierungselement (41b), wobei das erste Blockierungselement (41a) beweglich gelagert ist und aus einer im Initialzustand eingenommenen Freigabestellung des ersten Blockierungselements (41a) in Richtung einer Blockierungsstellung des ersten Blockierungselements (41a) bewegbar ist, und wobei das zweite Blockierungselement (41b) vom ersten Blockierungselement (41a) separat beweglich gelagert ist und aus einer im Initialzustand eingenommenen Freigabestellung des zweiten Blockierungselements (41b) in Richtung einer Blockierungsstellung des zweiten Blockierungselements (41b) bewegbar ist,
wobei das erste Blockierungselement (41a) und das zweite Blockierungselement (41b) jeweils dazu ausgelegt sind, in ihrer jeweiligen Freigabestellung eine rotierende Bewegung des Übertragungselements (14) zuzulassen und in ihrer jeweiligen Blockierungsstellung eine rotierende Bewegung des Übertragungselements (14) durch Eingriff zu blockieren;
- eine Antriebsvorrichtung (43a, 43b), wobei die Antriebsvorrichtung (43a, 43b) das erste Blockierungselement (41a) und das zweite Blockierungselement (41b) mit einer Kraft in Richtung ihrer jeweiligen Blockierungsstellung beaufschlagt;
- eine Rückhaltevorrichtung (44, 45), wobei die Rückhaltevorrichtung (44, 45) im Initialzustand das erste Blockierungselement (41a) und das zweite Blockierungselement (41b) gegen die von der Antriebsvorrichtung (43a, 43b) auf das erste Blockierungselement (41a) und das zweite Blockierungselement (41b) ausgeübte Kraft in seiner jeweiligen Freigabestellung hält;
- eine Auslösevorrichtung (46), wobei die Auslösevorrichtung (46) bei Überschreiten einer Auslösetemperatur und/oder bei Beaufschlagung mit einer Auslösewärme die Rückhaltevorrichtung (44, 45) irreversibel deaktiviert und dadurch die Auslösung der Blockierungsvorrichtung (4) erfolgt.

2. Blockierungsvorrichtung (4) nach Anspruch 1, wobei dass das erste Blockierungselement (41a) und das zweite Blockierungselement (41b) jeweils linearbeweglich geführt sind.

3. Blockierungsvorrichtung (4) nach Anspruch 2, wobei eine Bewegungsrichtung des ersten Blockierungselements (41a) und eine Bewegungsrichtung des zweiten Blockierungselements (41b) von ihrer jeweiligen Freigebestellung in ihre jeweilige Blockierungsstellung parallel zueinander sind.

4. Blockierungsvorrichtung (4) nach einem der Ansprüche 1 bis 3, wobei eine Bewegungsrichtung des ersten Blockierungselements (41a) und eine Bewegungsrichtung des zweiten Blockierungselements (41b) von ihrer jeweiligen Freigebestellung in ihre jeweilige Blockierungsstellung quer zu einer Drehachse (x) des Übertragungselements (14) verlaufen.

5. Blockierungsvorrichtung (4) nach einem der Ansprüche 1 bis 4, wobei das erste Blockierungselement (41a) und das zweite Blockierungselement (41b) derart angeordnet sind, dass sie in ihrem jeweiligen im Blockierungszustand in eine Ausnehmung (143) des Übertragungselements (14) einzugreifen.

6. Blockierungsvorrichtung (4) nach einem der Ansprüche 1 bis 5, wobei das erste Blockierungselement (41a) und das zweite Blockierungselement (41b) derart angeordnet sind, dass für jede rotatorische Stellung des Übertragungselements (14) bei Auslösung zumindest das erste Blockierungselement (41a) oder das zweite Blockierungselement (41b) in Eingriff mit dem Übertragungselement (14) gelangt.

7. Blockierungsvorrichtung (4) nach einem der Ansprüche 1 bis 6, wobei die Antriebsvorrichtung (43a, 43b) eine auf das erste Blockierungselement (41a) wirkende erste Druckfeder und eine auf das zweite Blockierungselement (41b) wirkende zweite Druckfeder umfasst.

8. Blockierungsvorrichtung (4) nach einem der Ansprüche 1 bis 7, wobei die Rückhaltevorrichtung (44, 45) ein distales Rückhalteelement (45) und ein separates proximales Rückhaltelement (44) aufweist, wobei das distale Rückhalteelement (45) gegen ein Widerlager (42) festgelegt ist und im Initialzustand das proximale Rückhaltelement (44) mit dem ersten Blockierungselement (41a) und dem zweiten Blockierungselement (41b) in Eingriff steht, wobei das distale Rückhaltelement (45) und das proximale Rückhaltelement (44) im Initialzustand über die Auslösevorrichtung (46) starr gekoppelt sind und ein Versagen der Auslösevorrichtung (46) die Auslösung bewirkt.

9. Blockierungsvorrichtung (4) nach Anspruch 8, wobei die Auslösevorrichtung (46) das distale Rückhaltelement (45) und das proximalen Rückhaltelement (44) im Initialzustand stoff- und/oder formschlüssig verbindet.

10. Blockierungsvorrichtung (4) nach Anspruch 9, umfassend ein durch Lot oder Klebstoff gebildetes Aktivierungselement (46),welches bei Überschreiten der Auslösetemperatur und/oder bei Beaufschlagung mit der Auslösewärme aufschmilzt.

11. Blockierungsvorrichtung (4) nach einem der Ansprüche 1 bis 10, wobei die Blockierungsvorrichtung im Initialzustand eine abgeschlossene, kompakte Baugruppe bildet.

12. Klappenantrieb (1), umfassend:
- einen elektrischen Aktuator, insbesondere Motor (10),
- ein Getriebe (11), wobei eine Eingangsseite des Getriebes (11) mit dem Aktuator (10) gekoppelt ist und eine Ausgangsseite des Getriebes (11) eine Klappenschnittstelle (12) zur Kopplung mit einem Klappenelement (21) aufweist, wobei das Getriebe (11) ein im Kraftfluss vom Aktuator zur Klappenschnittstelle angeordnetes Übertragungselement (14) aufweist, welches sich bei Betätigung des Klappenantriebs rotatorisch bewegt;
- eine Blockierungsvorrichtung nach einem der Ansprüche 1 bis 11, welche in ihrem Blockierungszustand eine rotatorische Bewegung des Übertragungselements (14) und der Klappenschnittstelle (12) blockiert.

13. Klappenantrieb (1) nach Anspruch 12, wobei das das Übertragungselement (14) im Kraftfluss vor einer Ausgangsstufe (113) des Getriebes (11) angeordnet ist.

14. Klappenantrieb (1) nach einem der Ansprüche 12 oder 13, wobei das das Übertragungselement (14), die Klappenschnittstelle (12) und alle Elemente im Kraftfluss zwischen Übertragungselement (14) und Klappenschnittstelle (12) dazu ausgelegt sind, einer Temperatur jenseits der Auslösetemperatur und/oder einer Beaufschlagung mit einer Wärme jenseits der Auslösewärme standzuhalten.

15. Klappenvorrichtung, umfassend:
- einen Klappenantrieb (1) gemäss einem der Ansprüche 12 bis 14,
- eine Klappe (2) mit einem zur Anordnung in einem Fluidstrom, insbesondere
einem Gasstrom ausgelegte beweglichen Klappenelement (21), wobei das Klappenelement (21) mit der Klappenschnittstelle (12) gekoppelt und durch Betätigung des Klappenantriebs (1) im Initialzustand der Blockierungsvorrichtung (4) bewegbar und im Blockierungszustand der Blockierungsvorrichtung (4) unbeweglich blockiert ist.

## Claims

1. Blocking device (4) for a damper drive (1) with a transmission element (14) rotating when the damper drive (1) is actuated, wherein the blocking device (4), when triggered, is irreversibly transferrable from an initial state into an alternative blocking state, and the blocking device (4) comprises:
- a first blocking element (41a) and a second blocking element (41b), wherein the first blocking element (41a) is movably mounted and is movable from a release position of the first blocking element (41a), adopted in the initial state, in the direction of a blocking position of the first blocking element (41a), and wherein the second blocking element (41b) is movably mounted separately from the first blocking element (41a) and is movable and from a release position of the second blocking element (41b), adopted in the initial state, in the direction of a blocking position of the second blocking element (41b),
wherein the first blocking element (41a) and the second blocking element (41b) are each designed, in their respective release position, to allow a rotating movement of the transmission element (14) and, in their respective blocking position, to block a rotating movement of the transmission element (14) by engagement;
- a drive device (43a, 43b), wherein the drive device (43a, 43b) acts on the first blocking element (41a) and the second blocking element (41b) with a force in the direction of their respective blocking position;
- a retaining device (44, 45), wherein the retaining device (44, 45), in the initial state, holds the first blocking element (41a) and the second blocking element (41b), in their respective release position, counter to the force exerted by the drive device (43a, 43b) on the first blocking element (41a) and the second blocking element (41b);
- a trigger device (46), wherein the trigger device (46) irreversibly deactivates the retaining device (44, 45) when a triggering temperature is exceeded and/or when a triggering heat is applied, and the blocking device (4) is thereby triggered.

2. Blocking device (4) according to Claim 1, wherein the first blocking element (41a) and the second blocking element (41b) are each guided linearly movably.

3. Blocking device (4) according to Claim 2, wherein a direction of movement of the first blocking element (41a) and a direction of movement of the second blocking element (41b) from their respective release position into their respective blocking position are parallel to each other.

4. Blocking device (4) according to one of Claims 1 to 3, wherein a direction of movement of the first blocking element (41a) and a direction of movement of the second blocking element (41b) from their respective release position into their respective blocking position run transversely with respect to an axis of rotation (x) of the transmission element (14) .

5. Blocking device (4) according to one of Claims 1 to 4, wherein the first blocking element (41a) and the second blocking element (41b) are arranged in such a way that, in their respective blocking state, they engage in a recess (143) of the transmission element (14) .

6. Blocking device (4) according to one of Claims 1 to 5, wherein the first blocking element (41a) and the second blocking element (41b) are arranged in such a way that, for each rotational position of the transmission element (14) when triggered, at least the first blocking element (41a) or the second blocking element (41b) comes into engagement with the transmission element (14).

7. Blocking device (4) according to one of Claims 1 to 6, wherein the drive device (43a, 43b) comprises a first compression spring acting on the first blocking element (41a) and a second compression spring acting on the second blocking element (41b).

8. Blocking device (4) according to one of Claims 1 to 7, wherein the retaining device (44, 45) has a distal retaining element (45) and a separate proximal retaining element (44), wherein the distal retaining element (45) is fixed against an abutment (42) and, in the initial state, the proximal retaining element (44) is in engagement with the first blocking element (41a) and the second blocking element (41b), wherein the distal retaining element (45) and the proximal retaining element (44) are rigidly coupled in the initial state via the trigger device (46), and a failure of the trigger device (46) causes the triggering.

9. Blocking device (4) according to Claim 8, wherein the trigger device (46) connects the distal retaining element (45) and the proximal retaining element (44) in a materially bonded and/or form-fitting manner in the initial state.

10. Blocking device (4) according to Claim 9, comprising an activation element (46) which is formed by solder or adhesive and which melts when the triggering temperature is exceeded and/or when subjected to the triggering heat.

11. Blocking device (4) according to one of Claims 1 to 10, wherein the blocking device forms a self-contained, compact assembly in the initial state.

12. Damper drive (1), comprising:
- an electrical actuator, in particular a motor (10),
- a gear mechanism (11), wherein an input side of the gear mechanism (11) is coupled to the actuator (10) and an output side of the gear mechanism (11) has a damper interface (12) for coupling to a damper element (21), wherein the gear mechanism (11) has a transmission element (14) which is arranged in the power flow from the actuator to the damper interface and which moves in rotation when the damper drive is actuated;
- a blocking device according to one of Claims 1 to 11, which in its blocking state blocks a rotational movement of the transmission element (14) and of the damper interface (12).

13. Damper drive (1) according to Claim 12, wherein the transmission element (14) is arranged in the power flow upstream from an output stage (113) of the gear mechanism (11).

14. Damper drive (1) according to either of Claims 12 and 13, wherein the transmission element (14), the damper interface (12) and all elements in the power flow between transmission element (14) and damper interface (12) are designed to withstand a temperature beyond the triggering temperature and/or exposure to heat beyond the triggering heat.

15. Damper device comprising:
- a damper drive (1) according to one of Claims 12 to 14,
- a damper (2) with a movable damper element (21) designed for arrangement in a fluid stream, in particular a gas stream,
wherein the damper element (21) is coupled to the damper interface (12) and is movable by actuation of the damper drive (1) in the initial state of the blocking device (4) and is blocked immovably in the blocking state of the blocking device (4).

## Revendications

1. Dispositif de blocage (4) pour un entraînement de clapet (1) avec un élément de transmission (14) rotatif lors de l'actionnement de l'entraînement de clapet (1), le dispositif de blocage (4) pouvant être transféré de manière irréversible d'un état initial à un état de blocage alternatif par déclenchement, et le dispositif de blocage (4) comprenant :
- un premier élément de blocage (41a) et un deuxième élément de blocage (41b), le premier élément de blocage (41a) étant monté de manière mobile et pouvant être déplacé d'une position de libération du premier élément de blocage (41a) prise dans l'état initial en direction d'une position de blocage du premier élément de blocage (41a), et le deuxième élément de blocage (41b) étant monté de manière mobile séparément du premier élément de blocage (41a) et pouvant être déplacé d'une position de libération du deuxième élément de blocage (41b) prise dans l'état initial en direction d'une position de blocage du deuxième élément de blocage (41b),
le premier élément de blocage (41a) et le deuxième élément de blocage (41b) étant chacun conçus pour permettre un mouvement rotatif de l'élément de transmission (14) dans leur position de libération respective et pour bloquer par engagement un mouvement rotatif de l'élément de transmission (14) dans leur position de blocage respective ;
- un dispositif d'entraînement (43a, 43b), le dispositif d'entraînement (43a, 43b) sollicitant le premier élément de blocage (41a) et le deuxième élément de blocage (41b) avec une force en direction de leur position de blocage respective ;
- un dispositif de retenue (44, 45), le dispositif de retenue (44, 45), à l'état initial, retenant le premier élément de blocage (41a) et le deuxième élément de blocage (41b) dans sa position de libération respective contre la force exercée par le dispositif d'entraînement (43a, 43b) sur le premier élément de blocage (41a) et le deuxième élément de blocage (41b) ;
- un dispositif de déclenchement (46), le dispositif de déclenchement (46), lors du dépassement d'une température de déclenchement et/ou lors de la sollicitation avec une chaleur de déclenchement, désactivant irréversiblement le dispositif de retenue (44, 45), et le déclenchement du dispositif de blocage (4) ayant ainsi lieu.

2. Dispositif de blocage (4) selon la revendication 1, le premier élément de blocage (41a) et le deuxième élément de blocage (41b) étant guidés respectivement de manière mobile linéairement.

3. Dispositif de blocage (4) selon la revendication 2, une direction de déplacement du premier élément de blocage (41a) et une direction de déplacement du deuxième élément de blocage (41b) étant parallèles entre elles de leur position de libération respective à leur position de blocage respective.

4. Dispositif de blocage (4) selon l'une quelconque des revendications 1 à 3, une direction de déplacement du premier élément de blocage (41a) et une direction de déplacement du deuxième élément de blocage (41b) de leur position de libération respective à leur position de blocage respective étant transversales à un axe de rotation (x) de l'élément de transmission (14).

5. Dispositif de blocage (4) selon l'une quelconque des revendications 1 à 4, le premier élément de blocage (41a) et le deuxième élément de blocage (41b) étant agencés de telle sorte que, dans leur état de blocage respectif, ils s'engagent dans un évidement (143) de l'élément de transmission (14).

6. Dispositif de blocage (4) selon l'une quelconque des revendications 1 à 5, le premier élément de blocage (41a) et le deuxième élément de blocage (41b) étant agencés de telle sorte que, pour chaque position de rotation de l'élément de transmission (14), au moins le premier élément de blocage (41a) ou le deuxième élément de blocage (41b) vient en engagement avec l'élément de transmission (14) lors du déclenchement.

7. Dispositif de blocage (4) selon l'une quelconque des revendications 1 à 6, le dispositif d'entraînement (43a, 43b) comprenant un premier ressort de compression agissant sur le premier élément de blocage (41a) et un deuxième ressort de compression agissant sur le deuxième élément de blocage (41b).

8. Dispositif de blocage (4) selon l'une quelconque des revendications 1 à 7, le dispositif de retenue (44, 45) présentant un élément de retenue distal (45) et un élément de retenue proximal séparé (44), l'élément de retenue distal (45) étant fixé contre un contre-appui (42) et, dans l'état initial, l'élément de retenue proximal (44) étant en engagement avec le premier élément de blocage (41a) et le deuxième élément de blocage (41b) ; dans l'état initial, l'élément de retenue distal (45) et l'élément de retenue proximal (44) étant couplés de manière rigide par l'intermédiaire du dispositif de déclenchement (46) et une défaillance du dispositif de déclenchement (46) provoquant le déclenchement.

9. Dispositif de blocage (4) selon la revendication 8, le dispositif de déclenchement (46) reliant l'élément de retenue distal (45) et l'élément de retenue proximal (44) à l'état initial par liaison de matière et/ou par complémentarité de forme.

10. Dispositif de blocage (4) selon la revendication 9, comprenant un élément d'activation (46) formé par une brasure ou un adhésif, qui fond lors du dépassement de la température de déclenchement et/ou lors de la sollicitation avec la chaleur de déclenchement.

11. Dispositif de blocage (4) selon l'une quelconque des revendications 1 à 10, le dispositif de blocage formant à l'état initial un ensemble compact fermé.

12. Entraînement de clapet (1), comprenant :
- un actionneur électrique, notamment un moteur (10),
- un engrenage (11), un côté entrée de l'engrenage (11) étant couplé à l'actionneur (10) et un côté sortie de l'engrenage (11) présentant une interface de clapet (12) pour le couplage avec un élément de clapet (21), l'engrenage (11) présentant un élément de transmission (14) agencé dans le flux de force de l'actionneur à l'interface de clapet, lequel se déplace en rotation lors de l'actionnement de l'entraînement de clapet ;
- un dispositif de blocage selon l'une quelconque des revendications 1 à 11, qui, dans son état de blocage, bloque un mouvement de rotation de l'élément de transmission (14) et de l'interface de clapet (12).

13. Entraînement de clapet (1) selon la revendication 12, l'élément de transmission (14) étant agencé dans le flux de force avant un étage de sortie (113) de l'engrenage (11).

14. Entraînement de clapet (1) selon l'une quelconque des revendications 12 ou 13, l'élément de transmission (14), l'interface de clapet (12) et tous les éléments dans le flux de force entre l'élément de transmission (14) et l'interface de clapet (12) étant conçus pour résister à une température supérieure à la température de déclenchement et/ou à une sollicitation avec une chaleur supérieure à la chaleur de déclenchement.

15. Dispositif de clapet, comprenant :
- un entraînement de clapet (1) selon l'une quelconque des revendications 12 à 14,
- un clapet (2) avec un élément de clapet mobile (21) conçu pour être agencé dans un courant de fluide, notamment un courant de gaz,
l'élément de clapet (21) étant couplé à l'interface de clapet (12) et pouvant être déplacé par actionnement de l'entraînement de clapet (1) dans l'état initial du dispositif de blocage (4) et étant bloqué de manière immobile dans l'état de blocage du dispositif de blocage (4) .
